(19)

**Europäisches Patentamt**
**European Patent Office**
**Office européen des brevets**

(11)  **EP 3 815 000 B1**

(12)  # EUROPEAN PATENT SPECIFICATION

(45) Date of publication and mention
of the grant of the patent:
**12.03.2025  Bulletin 2025/11**

(21) Application number: **19798767.0**

(22) Date of filing: **11.10.2019**

(51) International Patent Classification (IPC):
**G06N 3/049** (2023.01)    **G06N 3/084** (2023.01)
**G06N 3/088** (2023.01)    **G06N 3/048** (2023.01)
**G06N 3/082** (2023.01)    G06N 3/006 (2023.01)
**G06N 20/00** (2019.01)    G06N 3/063 (2023.01)

(52) Cooperative Patent Classification (CPC):
**G06N 3/049; G06N 3/048; G06N 3/084;**
**G06N 3/088;** G06N 3/006; G06N 3/063;
G06N 3/082; G06N 20/00

(86) International application number:
**PCT/US2019/055848**

(87) International publication number:
**WO 2020/077215 (16.04.2020 Gazette 2020/16)**

(54) **TEMPORAL CODING IN LEAKY SPIKING NEURAL NETWORKS**

ZEITLICHE CODIERUNG IN UNDICHTEN NEURONALEN SPIKING-NETZEN

CODAGE TEMPOREL DANS DES RÉSEAUX DE NEURONES IMPULSIONNELS À FUITES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **11.10.2018  US 201862744150 P**

(43) Date of publication of application:
**05.05.2021  Bulletin 2021/18**

(73) Proprietor: **Google LLC**
**Mountain View, CA 94043 (US)**

(72) Inventors:
• **ALAKUIJALA, Jyrki**
**8002 Zurich (CH)**
• **COMSA, Lulia-Maria**
**8002 Zurich (CH)**
• **POTEMPA, Krzysztof**
**8002 Zurich (CH)**

(74) Representative: **Derry, Paul Stefan et al**
**Venner Shipley LLP**
**200 Aldersgate**
**London EC1A 4HD (GB)**

(56) References cited:
**WO-A1-2016/022241**    **WO-A1-2017/136104**
**US-A1- 2016 042 271**

• **MOSTAFA HESHAM: "Supervised Learning Based on Temporal Coding in Spiking Neural Networks", IEEE TRANSACTIONS ON NEURAL NETWORKS AND LEARNING SYSTEMS, IEEE, PISCATAWAY, NJ, USA, vol. 29, no. 7, 1 July 2018 (2018-07-01), pages 3227 - 3235, XP011685856, ISSN: 2162-237X, [retrieved on 20180621], DOI: 10.1109/TNNLS.2017.2726060**
• **ALLAN D COOP ET AL: "The Composite Neuron: A Realistic One-Compartment Purkinje Cell Model Suitable for Large-Scale Neuronal Network Simulations", JOURNAL OF COMPUTATIONAL NEUROSCIENCE, 1 March 2001 (2001-03-01), Boston, pages 173 - 186, XP055656435, Retrieved from the Internet <URL:https://link.springer.com/content/pdf/ 10.1023/A:1011269014373.pdf> [retrieved on 20200109], DOI: 10.1023/A:1011269014373**

EP 3 815 000 B1

- **SANDER M. BOHTE ET AL: "Error-backpropagation in temporally encoded networks of spiking neurons", NEUROCOMPUTING, vol. 48, no. 1-4, 29 August 2002 (2002-08-29), pages 17 - 37, XP055217086, ISSN: 0925-2312, DOI: 10.1016/S0925-2312(01) 00658-0**

- **IULIA M COMSA ET AL: "Temporal coding in spiking neural networks with alpha synaptic function", ARXIV.ORG, CORNELL UNIVERSITY LIBRARY, 201 OLIN LIBRARY CORNELL UNIVERSITY ITHACA, NY 14853, 30 July 2019 (2019-07-30), XP081488936**

**Description**

RELATED APPLICATIONS

This application claims priority to and the benefit of United States Provisional Patent Application Number 62/744,150, filed October 11, 2018. United States Provisional Patent Application Number 62/744,150.

FIELD

The present disclosure relates generally to neural networks. More particularly, the present disclosure relates to leaky spiking neural networks that perform temporal encoding.

BACKGROUND

Traditionally, artificial neural networks have been predominantly constructed from idealized neurons that use non-linear activation layers to generate continuous activation values based on a set of weighted inputs. Some neural networks have multiple sequential layers of such neurons, in which case they may be referred to as "deep" neural networks.

Non-spiking neural networks typically pass information through the network using non-linear activation layers that produce continuous-valued outputs. These non-linear activation layers are differentiable, which enables the gradient of a loss function with respect to the weights of the network to be determined. In the multi-layer case, the existence of the gradient of the loss function makes it possible to use gradient-based optimization methods in combination with the backpropagation algorithm to learn particular weight values that enable the network to accurately perform a certain task.

Gradient-based optimization techniques (e.g., gradient descent) have been highly successful in training continuous-valued neural networks. However, gradient-based techniques do not easily transfer to spiking neural networks due to the hard nonlinearity of spike generation and the discrete nature of spike communication.

Furthermore, spiking neural networks are dynamic systems in which the respective times at which various neurons spike play a critical role. This is in contrast to conventional feedforward neural networks in which time is abstracted away. In particular, state transfer in classic neural nets happens globally and synchronously.

Synchronous systems have to distribute a clock and lose some possibility of phase to be used to extend the information transfer bandwidth between the neurons. From the bandwidth viewpoint, ideally the neurons would self-synchronize. That would eliminate the clock distribution requirement and would increase the information transfer bandwidth in both hardware and software implementations of recurrent neural networks.

More particularly, unlike non-spiking neurons that output analog values, spiking neurons typically communicate using discrete spikes which are binary in nature (e.g., either a spike is output or not). Typically a spike triggers a trace of synaptic current in the receiving neuron or otherwise impacts a membrane potential of the receiving neuron. In some example formulations, the receiving neuron integrates received synaptic current over time until a firing threshold is reached, at which time the neuron itself spikes or fires. Due to their hard nonlinearity, neuron spike rates are typically non-differentiable, which has prevented widespread application of gradient-based techniques to spiking neural networks.

Thus, while backpropagation is an established general technique for training traditional non-spiking neural networks, a general technique for training spiking neural networks has not yet been established. Certain previous approaches that train spiking neural networks to produce particular spike patterns depend on the absence of any hidden layers (e.g., the input layer is directly connected to the output layer). Thus, multi-layer networks cannot be trained using these approaches.

It remains a challenge to train spiking networks, especially with multi-layer learning (e.g., deep spiking neural networks). Enabling learning within multi-layer spiking neural networks is an area of ongoing development and has potential to greatly improve the performance of spiking neural networks on different tasks. Mostafa Hesham: "Supervised Learning Based on Temporal Coding in Spiking Neural Network", IEEE Transactions on Neural Networks and Learning Systems, IEEE, Piscataway, NJ, USA, vol. 29, no. 7, 1 July 2018, pages 3227-3235 discloses that in a feedforward spiking network that uses a temporal coding scheme where information is encoded in spike times instead of spike rates, the network input-output relation is differentiable almost everywhere. Allan D. Coop et al.: "The Composite Neuron: A Realistic One-Compartment Purkinje Cell Model Suitable for Large-Scale Neuronal Network Simulations", Journal of Computational Neuroscience, 1 March 2001, pages 173-186 discloses a model in which conductances were modeled as either double exponential or alpha functions of time since the last spike.

SUMMARY

One example aspect of the present disclosure is directed to a computer system that includes one or more processors and one or more non-transitory computer readable media. The one or more non-transitory computer readable media collectively store a machine-learned spiking neural network that includes one or more spiking neurons that have an activation layer that uses a double exponential function to model a leaky input that an incoming neuron spike provides to a membrane potential of the spiking neuron. The one or more non-transitory computer readable media collectively store instructions that, when executed by the one or more processors, cause the computer system to perform operations. The operations include obtaining a network input. The operations include implementing the machine-learned spiking neural network to process the network input. The operations include receiving a network output generated by the machine-learned spiking neural network as a result of processing the network input.

In some implementations, the machine-learned spiking neural network encodes information in respective spike times associated with the one or more spiking neurons.

In some implementations, the double exponential function models the leaky input as a double exponential pulse. In some implementations, the double exponential function has the form $e^{-t}(t - 1 + c)$, where c is a hyperparameter. In some implementations, the double exponential function has the form $te^{-t}$.

In some implementations, the membrane potential of each of the one or more spiking neurons, if it has not spiked, has the form $\sum_i w_i(t - t_i)e^{t_i - t}$, where i refers to one or more presynaptic neurons connected to the spiking neuron via one or more artificial synapses with weights $w_i$ and spiking at time points $t_i$.

In some implementations, implementing the machine-learned spiking neural network includes determining, for each of the one or more spiking neurons, a spike time that corresponds to an earliest time at which the membrane potential of the spiking neuron is equal to a firing threshold.

In some implementations, determining, for each of the one or more spiking neurons, the spike time includes applying a Lambert W function to determine the spike time.

In some implementations, the operations further include: prior to obtaining the network input, training the machine-learned spiking neural network on training data via a gradient descent technique. In some implementations, training the machine-learned spiking neural network via the gradient descent includes determining, for each of the one or more spiking neurons, one or both of: a derivative of a spike time of such spiking neuron with respect to the time points $t_i$; and a derivative of the spike time of such spiking neuron with respect to one or more of the weights $w_i$, wherein the spike time corresponds to an earliest time at which the membrane potential of such spiking neuron is equal to a firing threshold. In some implementations, training the machine-learned spiking neural network via the gradient descent includes modifying, for each of the one or more spiking neurons, at least one of the weights $w_i$ based at least in part on one or both of the derivative of the spike time of such spiking neuron with respect to the time points $t_i$ and the derivative of the spike time of such spiking neuron with respect to one or more of the weights $w_i$.

In some implementations, the machine-learned spiking neural network includes a plurality of layers, at least two of the plurality of layers including at least one of the one or more spiking neurons, and the machine-learned spiking neural network has been trained on training data using a backpropagation technique.

In some implementations, the operations further include: training the machine-learned spiking neural network on training data via a gradient descent technique to simultaneously learn both parameters of the machine-learned spiking neural network and a topology of the machine-learned spiking neural network.

Another example aspect of the present disclosure is directed to a computer-implemented method to train a spiking neural network that encodes information in respective spike times associated with a plurality of spiking neurons included in the spiking neural network. The method includes obtaining, by one or more computing devices, data descriptive of the spiking neural network that includes the plurality of spiking neurons. Each of the plurality of spiking neurons is respectively connected to one or more pre-synaptic neurons via one or more artificial synapses that have one or more weights associated therewith. Each of the plurality of spiking neurons has an activation layer that controls a respective spike time of such spiking neuron based on a membrane potential of such spiking neuron. The activation layer for each of the plurality of spiking neurons includes a double exponential that models incoming spikes received from the one or more presynaptic neurons as leaky inputs to the membrane potential. The method includes training, by the one or more computing devices, the spiking neural network based on a set of training data. Training, by the one or more computing devices, the spiking neural network includes: determining, by the one or more computing devices, a gradient of a loss function that evaluates a performance of the spiking neural network on the set of training data; and modifying, by the one or more computing devices for at least one of the plurality of spiking neurons, at least one of the one or more weights based at least in part on the gradient of the loss function.

In some implementations, each of the plurality of spiking neurons receives the incoming spikes from the one or more presynaptic neurons at respective inbound spike times. In some implementations, determining, by the one or more computing devices, the gradient of the loss function includes determining, by the one or more computing devices, for at least one of the plurality of spiking neurons, a derivative of the spike time of such spiking neuron with respect to the inbound spike times.

In some implementations, determining, by the one or more computing devices, the gradient of the loss function includes determining, by the one or more computing devices, for at least one of the plurality of spiking neurons, a derivative of the spike time of such spiking neuron with respect to one or more of the weights associated with such spiking neuron.

In some implementations, training, by the one or more computing devices, the spiking neural network further includes modifying, by the one or more computing devices for at least one of the plurality of spiking neurons, at least one synaptic delay parameter based at least in part on the gradient of the loss function.

In some implementations, the plurality of spiking neurons are arranged in a plurality of layers. In some implementations, training, by the one or more computing devices, the spiking neural network includes backpropagating, by the one or more computing devices, the loss function through the plurality of layers.

In some implementations, for each of the plurality of spiking neurons, the membrane potential, if such spiking neuron has not yet spiked, has the form $\Sigma_i w_i(t - t_i)e^{t_i-t}$, where i refers to the one or more presynaptic neurons connected to such spiking neuron via one or more artificial synapses, $w_i$ refers to the one or more weights associated with the one or more artificial synapses, and $t_i$ refers to respective inbound spike times at which such spiking neuron receives the incoming spikes from the one or more presynaptic neurons.

In some implementations, the machine-learned spiking neural network includes one or more electronic circuits that include electronic components arranged to execute the machine-learned spiking neural network using electrical current.

In some implementations, for each of the one or more spiking neurons, the corresponding electronic components that model the double exponential function include two capacitors, two resistors, and one or more transistors.

These features, aspects, and advantages of various embodiments of the present disclosure will become better understood with reference to the following description and appended claims. The accompanying drawings, which are incorporated in and constitute a part of this specification, illustrate example embodiments of the present disclosure and, together with the description, serve to explain the related principles.

BRIEF DESCRIPTION OF THE DRAWINGS

Detailed discussion of embodiments directed to one of ordinary skill in the art is set forth in the specification, which makes reference to the appended figures, in which:

Figure 1 depicts a graphical diagram of an example spiking neuron according to example embodiments of the present disclosure.

Figure 2A-C depict example plots that illustrate the neuron model with double exponential synaptic function according to example embodiments of the present disclosure.

Figure 3A depicts a block diagram of an example computing system according to example embodiments of the present disclosure.

Figure 3B depicts a block diagram of an example computing device according to example embodiments of the present disclosure.

Figure 3C depicts a block diagram of an example computing device according to example embodiments of the present disclosure.

Reference numerals that are repeated across plural figures are intended to identify the same features in various implementations.

DETAILED DESCRIPTION

Overview

Generally, the present disclosure is directed to spiking neural networks that perform temporal encoding for phase-coherent neural computing. In particular, according to an aspect of the present disclosure, a spiking neural network can include one or more spiking neurons that have an activation layer that uses a double exponential function, which can also be referred to as an "alpha function," to model a leaky input that an incoming neuron spike provides to a membrane potential of the spiking neuron. The use of the double exponential function in the neuron's temporal transfer function creates a better defined maximum in time. This allows very clearly defined state transitions between "now" and the "future step" to happen without loss of phase coherence.

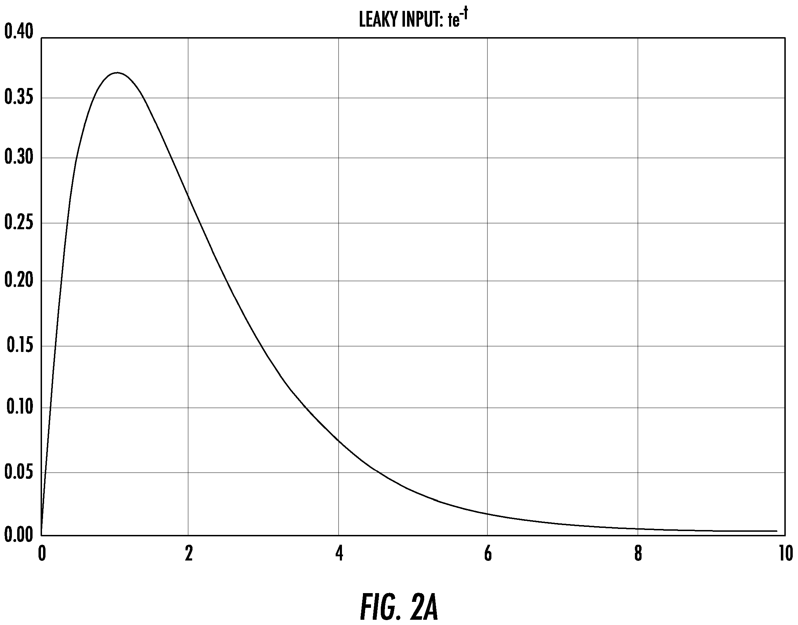

More particularly, the present disclosure provides biologically-realistic synaptic transfer functions, for example of the form $te^{-t}$, produced by the integration of exponentially decaying kernels. In contrast with the single exponential function, the double exponential function gradually rises before slowly decaying (see, e.g., Figures 2A-C), which allows more intricate interactions between presynaptic inputs. The double exponential function provides a biologically-plausible model for exploring the problem-solving abilities of spiking networks with temporal coding schemes. In particular, it is possible to derive exact gradients with respect to spike times using this model.

Therefore, aspects of the present disclosure are directed to spiking network models that use the double exponential function for synaptic transfer and encodes information in relative spike times. The networks can be fully trained in temporal domain using exact gradients over domains where relative spiking order is preserved. Example experimental results with models of this type have been shown capable of learning standard benchmark problems, such as Boolean logic gates and MNIST, encoded in individual spike times. To facilitate transformations of the class boundaries, synchronization pulses can be used, which are neurons that send spikes at input-independent, learned times.

The proposed model are easily able to solve temporally-encoded Boolean logic and other benchmark problems. An analysis of the behavior of the spiking network during training shows that it spontaneously displays two operational regimes that reflect a trade-off between speed and accuracy: a slow regime that is slow but very accurate, and a fast regime that is slightly less accurate but makes decisions much faster.

Thus, the present disclosure develops the idea of temporal coding in leaky neurons (e.g., leaky integrate-and-fire neurons). One primary aspect described herein is the encoding of information in the spike times of spiking neurons, rather than spike rates. In particular, the output of a neuron can be its spike time, which can depend on the timings and weights of presynaptic neurons that cause it to fire. The formulation of a neuron's spike time in the continuous time domain renders it differentiable, which enables usage of backpropagation and gradient-based techniques to learn the spike timings in the network. This also optionally allows the addition of synaptic delays, also trainable using backpropagation techniques.

As such, according to another aspect, the present disclosure provides systems that enable application of gradient-based learning algorithms to learn the double exponential time transfer function. Furthermore, the systems described herein can implement the gradient-based learning algorithm to learn to build internal states in a recurrent network, allowing the network to learn states and state transfers faster.

The present disclosure provides a number of technical effects and benefits. As one example technical effect and benefit, by encoding information in spike times, the use of spike counts or spike rates can be eliminated. Further, as described herein, the neuron spike times can be formulated as a continuous representation which is differentiable and therefore amenable to gradient-based training techniques. Use of gradient-based techniques allows precise learning within the network (e.g., at the level of single spike times) and naturally extends to multi-layer scenarios, which would not be possible in training approaches based on rate-coding. In addition, use of gradient-based techniques for training the network can be more efficient than various other existing techniques which are more computationally expensive.

Enabling efficient training of spiking neural networks with gradient-based techniques provides further technical effects and benefits. By the techniques described herein enabling the training of spiking neural networks with gradient-based techniques, spiking neural networks can be trained to perform many supervised and reinforcement learning tasks where it was previously impossible, or at least infeasible, to train spiking neural networks to perform these tasks. In many instances, implementations of spiking neural networks on neuromorphic hardware can operate with significantly less energy resources than alternatives capable of performing these tasks, e.g. perceptron-based networks.

The trained spiking neural networks described above is suited to perform speech recognition In particular, the inherently temporal nature of the trained spiking neural networks makes them particularly suited for speech recognition tasks operating on audio data.

As another example technical effect and benefit, by encoding information in continuous space spike times, the network can be enabled to operate asynchronously. This better models the human brain and enables use of differential equations. Further, in some implementations, use of an asynchronous network can enable multiple rhythms or flows of information to propagate through the network at the same time, which can allow for parallel, sequential, and/or recurrent processing of input.

As another example technical effect and benefit, by encoding information in spike times, neuron firing can be highly sparse because the time of each spike can encode a large amount of information. As such, the networks described herein can be much more efficiently implemented than networks which encode information using spike rates, which themselves can be more efficient than traditional non-spiking networks. More particularly, since temporal encoding neurons typically fire many fewer times than rate-based encoding neurons, less computing resources (e.g., energy resources, processing resources, memory resources, etc.) are required to be expended to run the network. Thus, by encoding in spike time (e.g., high information content in spikes that are sparse in time) rather than spike rate, the number of neuron spikes (e.g., each of which can consume resources) can be greatly reduced.

Use of the double exponential function in the neuron's activation layer also provides technical effects and benefits. As one example, the double exponential function better mimics actual biological neuron behavior and provides a natural inherent rhythm/speed for information propagation within the network.

As another example, the double exponential function creates a better defined maximum in time (e.g., as opposed to a square wave representation, single exponential representation, or other monotonic representation). This allows very clearly defined state transitions between "now" and the "future step" to happen without loss of phase coherence.

In addition, summing or integration of incoming spikes can happen more effectively as the incoming spike's impact is moved from the exact immediate time of receipt to a slightly delayed point in the future. This slight delay enables more information to be collected prior to neuron spiking.

The use of a double exponential function also enables differentiation to occur with a double differential instead of a single differential. The optimization surface for the double differential is often smoother than that of the single differential, which will often exhibit ripples. This smoother optimization surface can result in faster training times and better convergence, as the gradient descent technique is able to more quickly and easily locate an optimal point on the surface. Faster training and better convergence can result in savings of various resources as less computing resources (e.g., energy resources, processing resources, memory resources, etc.) are required to be expended to train the network.

Although particular emphasis is placed on use of the double exponential function in the present disclosure, other functions could be used in addition to the double exponential function. As examples, a Gaussian or a Poisson distribution could be used in a temporal activation layer. As other examples, other non-monotonic and/or unimodal functions can be used in addition to the double exponential function.

Example Description of Temporal Coding

In example implementations of the proposed models, information can be encoded in the relative timing of individual spikes. The input features can be encoded in temporal domain as the spike times of individual input neurons, with each neuron corresponding to a distinct feature. More salient information about a feature can be encoded as an earlier spike in the corresponding neuron. Information can propagate through the network in a temporal fashion. Each hidden and output neuron can spike when its membrane potential rises above a fixed threshold. Similarly to the input layer, the output layer of the network can encode a result in the relative timing of output spikes. In other words, the computational process can include producing a temporal sequence of spikes across the network in a particular order, with the result encoded in the ordering of spikes in the output layer.

This model can be used to solve standard classification problems. Given a classification problem with m inputs and $n$ possible classes, the inputs can be encoded as the spike times of individual neurons in the input layer and the result can be encoded as the index of the neuron that spikes first among the neurons in the output layer. An example drawn from class $k$ is classified correctly if and only if the $k^{th}$ output neuron is the first to spike. An earlier output spike can reflect more confidence of the network in classifying a particular example, as it implies more synaptic efficiency or a smaller number of presynaptic spikes. In a biological setting, the winning neuron could suppress the activity of neighbouring neurons through lateral inhibition, while in a machine learning setting the spike times of the non-winning neurons can be useful in indicating alternative predictions of the network. The learning process aims to change the synaptic weights and thus the spike timings in such a way that the target order of spikes is produced.

Example Spiking Neuron Architecture

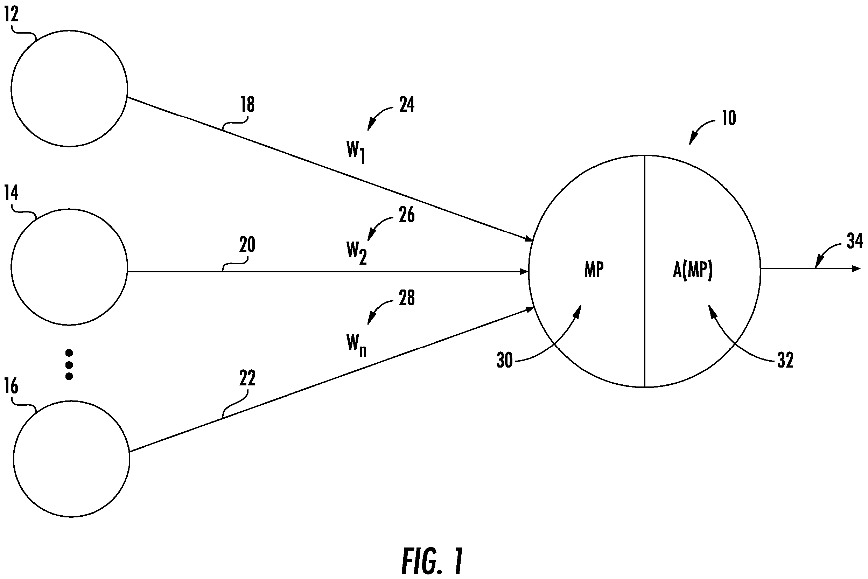

Figure 1 provides a graphical diagram of an example spiking neuron 10. The spiking neuron 10 can be connected to one or more presynaptic neurons 12, 14, 16 (e.g., which may themselves be spiking neurons). The spiking neuron 10 can be connected to the presynaptic neurons 12, 14, 16 via artificial synapses 18, 20, 22. The presynaptic neurons 12, 14, 16 can pass spikes to the spiking neuron 10 via the artificial synapses 18, 20, 22.

Each synapse 18, 20, 22 can have an adjustable weight 24, 26, 28 (e.g., scalar weight) associated therewith. The weights 24, 26, 28 can be changed as a result of learning. As described above, techniques for performing this learning rule within the spiking neural network context have been one of the most challenging components for developing multi-layer spiking neural networks because the non-differentiability of spike trains has limited application of the backpropagation algorithm.

Referring again to Figure 1, each artificial synapse 18, 20, 22 can be either excitatory (e.g., have a positive-valued weight), which increases the membrane potential of the receiving neuron 10 upon receipt, or inhibitory (e.g., have a negative-valued weight), which decreases the membrane potential of the receiving neuron 10 upon receipt.

More particularly, the spiking neuron 10 can have a membrane potential 30. The membrane potential 30 can be a continuous-valued function of time. In particular, the activity (e.g., transmitted spikes) of the presynaptic neurons 12, 14, 16 can modulate or otherwise impact the membrane potential 30 of spiking neuron 10. The spiking neuron 10 can also have an activation layer 32, which controls the spiking of the neuron (e.g., a spike time of the neuron 10) based on the membrane potential 30.

As one example, the activation layer 32 can generate an action potential or spike when the membrane potential 30 crosses a firing threshold. Thus, in one example, implementing the spiking neuron 10 can include determining a spike time that corresponds to an earliest time at which the membrane potential 30 of the spiking neuron 10 is equal to a firing threshold.

When the spiking neuron 10 fires or spikes, a spike can be sent along one or more downstream synapses 34 to one or more downstream neurons. Alternatively, depending on the position of the neuron 10 in the model structure, the spike can be an output of the network. Although one downstream synapse 34 is shown, the spike output by the neuron 10 can be sent down any number of downstream synapses 34.

Although not explicitly shown in Figure 1, various additional parameters can impact the behavior of the spiking neuron 10 such as, for example, synaptic delay parameter(s), bias parameter(s), and/or the like.

The activation layer 32 of the spiking neuron 10 uses a double exponential function to model a leaky input that an incoming neuron spike (e.g., an incoming spike from one of the presynaptic neurons 12, 14, 16) provides to the membrane potential 30 of the spiking neuron 10. In particular, this is obtained by integrating over time the incoming exponential synaptic current kernels of the form $\varepsilon(t) = \tau^{-1}e^{-\tau t}$, where $\tau$ is the decay constant. The potential of the neuronal membrane in response to a single incoming spike is then of the form $u(t) = te^{-t}$. This function has a gradual rise and a slow decay, peaking at $t_{max} = \tau^{-1}$. Every synaptic connection has an efficiency, or a weight. The decay rate has the effect of scaling the induced potential in amplitude and time, while the weight of the synapse has the effect of scaling the amplitude only

The use of the double exponential function in the neuron's activation layer 32 creates a better defined maximum in time. This allows very clearly defined state transitions between "now" and the "future step" to happen without loss of phase coherence.

More particularly, in some implementations, the double exponential function can model a leaky input as a double exponential pulse. A double exponential function can be any function that adheres to the following: $e^{-At} - e^{-Bt}$, with $A < B$, defined positive time $t$. For example, in some implementations, the double exponential function can take the form $e^{-t}(t - 1 + c)$, where c is a hyperparameter. In instances in which c is set equal to 1, the double exponential function can take the form $te^{-t}$. Figure 2A provides an example plot of a leaky input modeled using a double exponential function of this form. In some implementations, the double exponential function can be mathematically modeled using Rall's alpha function. (See Rall, Distinguishing theoretical synaptic potentials computed for different soma-dendritic distributions of synaptic input. 1967) In some implementations, the double exponential function may be referred to as a "dual exponential" function.

Referring again to Figure 1, using the double exponential function illustrated in Figure 2A, given a set of presynaptic neurons $I$ (e.g., 12, 14, 16) with weights $w_i$ (e.g., 24, 26, 28) and spiking at respective time points $t_i$, the membrane potential 30 at time $t$ (if it has not yet spiked) can be expressed as

$$V_{mem}(t) = \sum_{i \in I} w_i(t - t_i)e^{\tau(t_i - t)} \quad (1)$$

On the other hand, if a neuron has spiked, then there are several methods to "reset" it. One example is to restore the membrane potential to its default value and/or let the neuron be in a refractory period where it is unable to react to incoming stimuli.

Thus, the neuron 10 spikes when the membrane potential 30 crosses the firing threshold (see Figures 2A-C). To compute the spike time $t_{out}$ of a neuron: determine the minimal subset of all presynaptic inputs $I_{tout}$ with $t_i \leq t_{out}$ which cause the membrane potential to reach the threshold $\theta$ while rising:

$$\sum_{i \in I_{t_{out}}} w_i(t_{out} - t_i)e^{\tau(t_i - t_{out})} = \theta \quad (2)$$

This can be achieved by sorting the inputs and adding them to $I_{tout}$ one by one, until an incoming input arrives later than the predicted spike (if any) or there are no more inputs. Note that the set $I$ may not simply be computed as the earliest subset of presynaptic inputs that cause the membrane voltage to cross $\theta$. If a subset of inputs I causes the membrane to cross $\theta$ at time $t_{out}$, any additional inputs that occur between the maximum $t_i \in I$ and $t_{out}$ must be considered, and $t_{out}$ must be recomputed.

Eq. 2 has two potential solutions - one on the rising part of the function and one on the decaying part. If a solution exists (in other words, if the neuron spikes), then its spike time is the earlier of the two solutions.

For a set of inputs $I$, denote $A_I = \Sigma_{i \in I} w_i e^{\tau t_i}$ and $B_I = \Sigma_{i \in I} w_i e^{\tau t_i} t_i$. The spike time $t_{out}$ can be computed by solving Eq. 2 using the Lambert W function:

$$t_{out} = \frac{B_I}{A_I} - \frac{1}{\tau}W\left(-\tau \frac{\theta}{A_I} e^{\tau \frac{B_I}{A_I}}\right) \quad (3)$$

A spike will occur whenever the Lambert W function has a valid argument and the resulting $t_{out}$ is larger than all input spikes. As the earlier solution of this equation is valued, the main branch of the Lambert W function can be employed. The Lambert W function is real-valued when its argument is larger than or equal to $-e^{-1}$. It can be proven that this is always the case when Eq. 2 has a solution, by expanding $V_{mem}(t_{max}) \geq \theta$, where $t_{max} = \frac{B}{A} + \frac{1}{\tau}$ is the peak of the membrane potential function corresponding to the presynaptic set of inputs $I$.

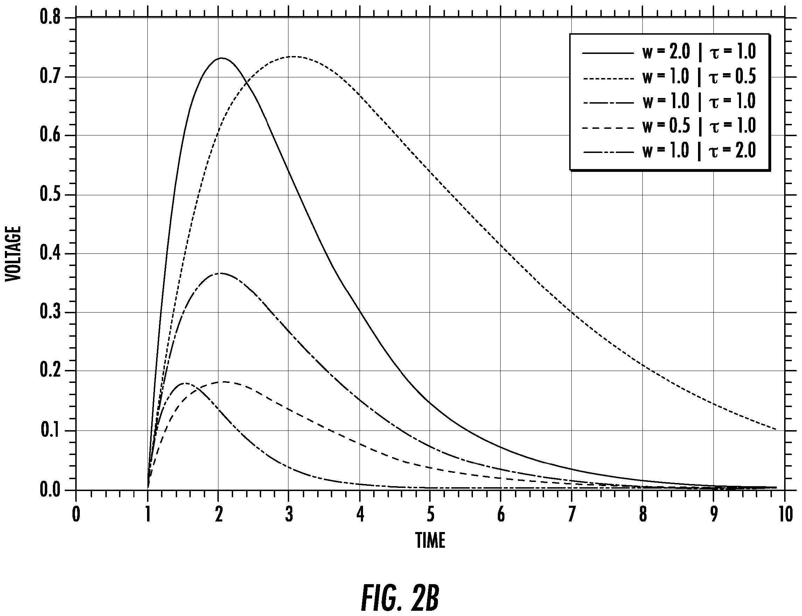

Figure 2B depicts example plots of the double exponential function different sets of weights w and decay constants $\tau$. The weight scales the function in amplitude, whereas the decay constant scales it in both amplitude and time.

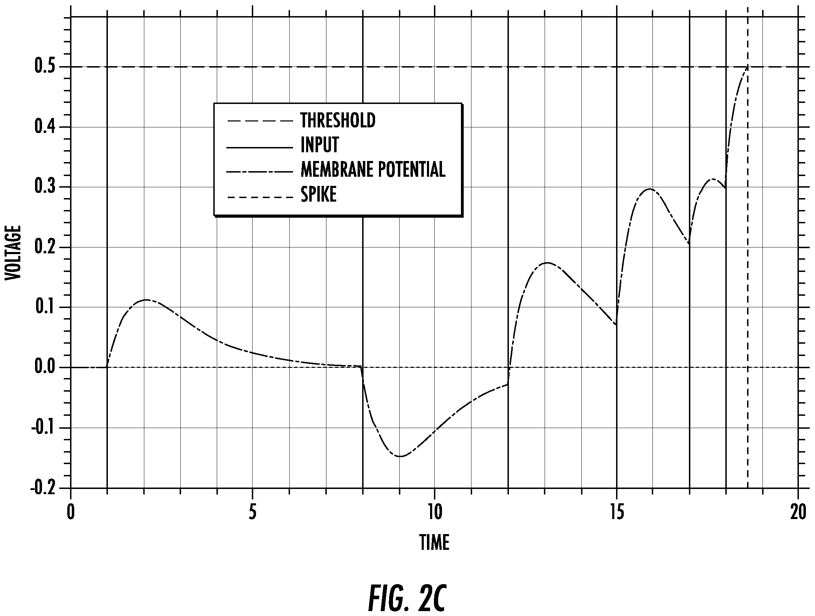

Figure 2C depicts example plots of potential membrane dynamics in response to excitatory and inhibitory inputs, followed by a spike. **In** this example, $\tau = \mathbf{1}$, w = {0.3, -0.4, 0.5, 0.7, 0.5, 0.8}, $t$ = {1, 8, 12, 15, 17, 18} and the spike occurs at $t_{out}$ = 18.64.

Example Neural Network Architectures

One example spiking neural network architecture according to the present disclosure can include one or more (e.g., many) spiking neurons and/or non-spiking neurons. Some or all of the spiking neurons can have the structure and function illustrated in and described with respect to Figure 1.

In some implementations, the neurons of the spiking neural network can be arranged in multiple sequential layers, including, for example, multiple sequential layers that each include spiking neurons (e.g., a "deep" spiking neural network). In one particular example, one or more layers that include spiking neurons can be followed by one or more layers that include non-spiking neurons.

The spiking network can be a feed-forward network, a recurrent network, a convolutional network, or combinations thereof. Connections between neurons in adjacent layers can be structured in an all-to-all configuration and/or in a sparse configuration.

The spiking neural network encodes information in the spike times of spikes that are output by spiking neurons of the network. Thus, the information output of a neuron is encoded in its spike time, which depends on the timings and weights of presynaptic neurons that caused it to fire. This can enable the network to operate asynchronously. This better models the human brain and enables use of differential equations and backpropagation to adjust the spike timings in the network.

In some implementations, for example in a classification problem, the input class can be determined by which neuron in the output layer spikes first. In some implementations, each spiking neuron in the network is allowed to spike only once per cycle.

Further, in some implementations, use of an asynchronous network can enable multiple rhythms or flows of information (also known as "wavefronts") to propagate through the network at the same time, which can allow for parallel, sequential, and/or recurrent processing of input. For example, multiple wavefronts can propagate through the network at different phases (e.g., different but coherent phases). Propagation of wavefronts in this manner does not rely on synchronized clocking. Instead, the wavefront is itself the clocking. In some implementations, explicit clocking policies can be imposed at or around interfaces for data input and/or output.

In one particular example, the spiking neural network can be toroidal in structure. In such implementations, wavefronts can be cyclically propagated around the toroidal network with or without additional input, output, and/or other modifications (e.g., sequential input can be input over time at each cycle).

In some implementations, the spiking neural networks can be implemented in the form of computer-readable instructions stored in a computer-readable medium which are accessed and executed by one or more processors. Alternatively or additionally, the spiking neural networks can be implemented in the form of one or more electronic circuits that include electronic components arranged to execute the machine-learned spiking neural network using electrical current. As an example, the corresponding electronic components that model the double exponential function can include two capacitors, two resistors, and one or more transistors.

Example Training Techniques

As one example training technique, backpropagation techniques can be used in combination with gradient-based techniques to backpropagate a loss through multiple layers of a network. For example, the loss can be a supervised loss of a loss function that evaluates the performance of the network on a set of labeled training data. Training the spiking neural network includes determining a gradient of a loss function that evaluates a performance of the spiking neural network on the set of training data; and modifying, for at least one of the plurality of spiking neurons, at least one of the one or more weights based at least in part on the gradient of the loss function.

As one example, the spiking network can learn to solve problems whose inputs and solution are encoded in the times of individual input and output spikes. Therefore, one possible goal is to adjust the output spike times so that their relative order is correct. Given a classification problem with n classes, the neuron corresponding to the correct label should be the earliest to spike. Therefore, one example loss function that can be used seeks to minimize the spike time of the target neuron and maximize the spike time(s) of the non-target neurons. Note that this is the opposite of the usual classification setting involving probabilities, where the value corresponding to the correct class is maximised and those corresponding to incorrect classes are minimised. As one example technique to achieve this effect, the softmax function can be used on the *negative* values of the spike times $o_i$ (which are always positive) in the output layer: $p_j = e^{-o_j} / \sum_{i=1}^{n} e^{-o_i}$ .

Cross-entropy loss can be used the usual form: $L(y_i, p_i) = -\sum_{i=1}^{n} y_i \ln p_i$ , where $y_i$ is an element of the one-hot encoded target vector of output spike times. Taking the negative values of the spike times ensures that minimizing the cross-entropy loss minimizes the spike time of the correct label and maximizes the rest.

In some implementations, determining the gradient of the loss function (e.g., the loss described above or other loss functions) can include determining, for at least one of the plurality of spiking neurons, a derivative of the spike time of such spiking neuron with respect to the weights associated with such spiking neuron.

As one example, to minmize the cross-entropy loss described above, a training system can change the value of the weights across the network. This has the effect of delaying or advancing spike times across the network. For any presynaptic spike arriving at time $t_j \in I$ with weight $w_j$, denote $W_I = W(-\frac{\theta}{A_I} e^{\frac{B_I}{A_I}})$ and compute the exact derivative of the postsynaptic spike time with respect to any presynaptic spike time $t_j$ and its weight $w_j$ as:

$$\frac{\partial t_{out}}{\partial t_j} = \frac{w_j e^{t_j}(t_j - \frac{B_i}{A_I} + W_I + 1)}{A_I(1 + W_I)} \quad (4)$$

$$\frac{\partial t_{out}}{\partial w_j} = \frac{e^{t_j}(t_j - \frac{B_I}{A_I} + W_I)}{A_I(1 + W_I)} \quad (5)$$

As the postsynaptic spike time moves earlier or later in time, when $I_{t_{out}}$ changes to include or exclude presynaptic spikes, the landscape of the loss function also changes. Furthermore, the loss function exhbits discontinuities where an output neuron stops spiking. This problem can be countered using a penalty, as described below. In practice, optimization is possible in spite of these challenges.

In some implementations, one or more synaptic delay parameters associated with the neuron can be trained using this gradient. As such, in some implementations, determining the gradient of the loss function can include determining, for at least one of the plurality of spiking neurons, a derivative of the spike time of such spiking neuron with respect to the weights associated with such spiking neuron and the inbound spike times associated with inbound spikes received by such neuron.

Additional example details regarding the derivation of the above gradient expressions are contained in United States Provisional Patent Application Number 62/744,150.

Example Synchronization Pulses

In some implementations, in order to adjust the class boundaries in the temporal domain, a temporal form of bias can be used to adjust spike times, i.e. to delay or advance them in time. In this model, synchronization pulses can act as additional inputs across some or all of the layers of the network, in order to provide temporal bias across the network. These can be thought of as similar to internally-generated rhythmic activity in biological networks, such as alpha waves in the visual cortex or theta and gamma waves in the hippocampus.

A set of pulses can be connected to all neurons in the network, to neurons within individual layers, or to individual neurons. A per-neuron bias is biologically implausible and more computationally demanding, hence some of the proposed models use either a single set of pulses per network, to solve easier problems, or a set of pulses per layer, to solve more difficult problems. All pulses can be fully connected to either all non-input neurons in the network or to all neurons of the non-input layer they are assigned to.

Each pulse can spike at a predefined and trainable time, providing a reference spike delay. Each set of pulses can be initialized to spike at times evenly distributed in the interval (0,1). Subsequently, the spike time of each pulse can be learned using Eq. 4, while the weights between pulses and neurons are trained using Eq. 5, in the same way as all other weights in the network.

Example Hyperparameters

Example experiments were conducted on fully connected feedforward networks with topology n_hidden (a vector of hidden layer sizes). Adam optimization was used with mini-batches of size batch_size to minimise the cross-entropy loss. The Adam optimizer performed better than stochastic gradient descent. Different learning rates were used for the pulse spike time (learning_rate_pulses) and the weights of both pulse and non-pulse neurons (learning_rate). A fixed firing threshold (fire_threshold) and decay constant (decay_constant) were used.

Network weight initialisation is crucial for the subsequent training of the network. In a spiking network, it is important that the initial weights are large enough to cause at least some of the neurons to spike; in absence of spike events, there will be no gradient to use for learning. Therefore, in some implementations, a modified form of Glorot initialization can be used where the weights are drawn from a normal distribution with standard deviation $\sigma = \sqrt{2.0/(fan_{in} + fan_{out})}$ (as in the original scheme) and custom mean $\mu$ = $multiplier \times \sigma$. If the multiplication factor of the mean is 0, this is the same is the original Glorot initialization scheme. Different multiplication factors can be set for pulse (pulse_init_multiplier), and non-pulse (nonpulse_init_multiplier) weights. This allows the two types of neurons to pre-specialise into inhibitory and excitatory roles. In biological brains, internal oscillations are thought to be generated through inhibitory activities that regulate the excitatory effects of incoming stimuli.

Some example possible hyperparameters of the model are shown in the table below. The first column shows the default parameters chosen to solve Boolean logic problems. The second column shows the search range used in the hyperparameter search. Asterisks ( *) mark ranges that were probed according to a logarithmic scale; all others were probed linearly. The last column shows the value chosen from these ranges to solve an example MNIST-based experiment.

| Parameter | Default value (Boolean tasks) | Search range | Chosen value (MNIST) |
|---|---|---|---|
| batch_size | 1 | [1,1000]* | 5 |
| clip_derivative | 100.0 | [1,1000] | 539.7 |
| decay_constant ($\tau$) | 1.0 | [0.1,2] | 0.181769 |
| fire_threshold ($\theta$) | 1.0 | [0.1,1.5] | 1.16732 |
| learning_rate | 0.001 | [$10^{-5}$, 1.0]* | $10^{-4} \times 2.01864$ |
| learning_rate_pulses | 0.001 | [$10^{-5}$, 1.0]* | $10^{-2} \times 5.95375$ |
| n_hidden | $1 \times 2$ | $[0,4] \times [2,1000]^*$ | $1 \times 340$ |
| n_pulses | 1 | [0,10] | 10 |
| nonpulse_init_multiplier | 0.0 | [-10,10] | -0.275419 |
| penalty _no_spike | 1.0 | [0,100] | 48.3748 |
| pulse _init_multiplier | 0.0 | [-10,10] | 7.83912 |

Despite careful initialization, in some instances, the network might still become quiescent during training. This problem can be prevented by adding a fixed small penalty (penalty_no_spike) to the derivative of all presynaptic weights of a neuron that has not fired. In practice, after the training phase, some of the neurons will spike too late to matter in the classification and thus they do need to spike at all.

Another problem is that the gradients become very large as a spike becomes closer to, but not sufficient for the postsynaptic neuron to reach the firing threshold. In this case, in Eq. 4 and 5, the value of the Lambert W function will approach its minimum (-1) as its argument approaches $-e^{-1}$, the denominator of the derivatives will approach zero and the derivatives will approach infinity. To counter this, the derivatives can be clipped to a fixed value clip_derivative. Note that this behavior will occur in any activation function that has a maximum (hence, a biologically-plausible shape), is differentiable, and has a continuous derivative.

In addition to these hyperparameters, several other heuristics for the spiking net can optionally be used. These include weight decay, adding random noise during training to the spike times of either the inputs or all non-output neurons in the network, averaging over brightness values in a convolutional-like manner and adding additional input neurons responding to the inverted version of the image, akin to the on/off bipolar cells in the retina. Additionally, in some implementations, presynaptic neurons can be removed from the presynaptic set once their individual contribution to the potential decayed below a decay threshold. This can be achieved by solving an equation similar to Eq. 2 for reaching a decay threshold on the decaying part of the function, using the -1 branch of the Lambert W function.

Example Devices and Systems

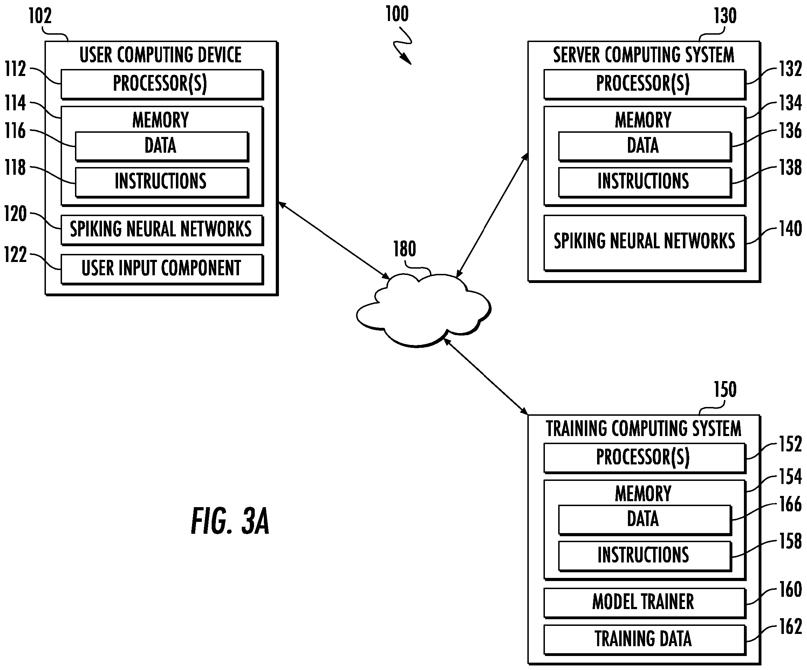

Figure 3A depicts a block diagram of an example computing system 100 according to example embodiments of the present disclosure. The system 100 includes a user computing device 102, a server computing system 130, and a training computing system 150 that are communicatively coupled over a network 180.

The user computing device 102 can be any type of computing device, such as, for example, a personal computing device (e.g., laptop or desktop), a mobile computing device (e.g., smartphone or tablet), a gaming console or controller, a wearable computing device, an embedded computing device, or any other type of computing device.

The user computing device 102 includes one or more processors 112 and a memory 114. The one or more processors 112 can be any suitable processing device (e.g., a processor core, a microprocessor, an ASIC, a FPGA, a controller, a microcontroller, etc.) and can be one processor or a plurality of processors that are operatively connected. The memory 114 can include one or more non-transitory computer-readable storage mediums, such as RAM, ROM, EEPROM, EPROM, flash memory devices, magnetic disks, etc., and combinations thereof. The memory 114 can store data 116 and instructions 118 which are executed by the processor 112 to cause the user computing device 102 to perform operations.

In some implementations, the user computing device 102 can store or include one or more spiking neural networks 120. For example, the spiking neural networks 120 can be or can otherwise include spiking neurons as described herein. Neural networks can include feed-forward neural networks, recurrent neural networks (e.g., long short-term memory recurrent neural networks), convolutional neural networks or other forms of neural networks. Example spiking neural networks 120 are discussed with reference to Figures 1 and 2.

In some implementations, the one or more spiking neural networks 120 can be received from the server computing system 130 over network 180, stored in the user computing device memory 114, and then used or otherwise implemented by the one or more processors 112. In some implementations, the user computing device 102 can implement multiple parallel instances of a single spiking neural network 120.

Additionally or alternatively, one or more spiking neural networks 140 can be included in or otherwise stored and implemented by the server computing system 130 that communicates with the user computing device 102 according to a client-server relationship. For example, the spiking neural networks 140 can be implemented by the server computing system 140 as a portion of a web service. Thus, one or more networks 120 can be stored and implemented at the user computing device 102 and/or one or more networks 140 can be stored and implemented at the server computing system 130.

The user computing device 102 can also include one or more user input component 122 that receives user input. For example, the user input component 122 can be a touch-sensitive component (e.g., a touch-sensitive display screen or a touch pad) that is sensitive to the touch of a user input object (e.g., a finger or a stylus). The touch-sensitive component can serve to implement a virtual keyboard. Other example user input components include a microphone, a traditional keyboard, or other means by which a user can provide user input.

The server computing system 130 includes one or more processors 132 and a memory 134. The one or more processors 132 can be any suitable processing device (e.g., a processor core, a microprocessor, an ASIC, a FPGA, a controller, a microcontroller, etc.) and can be one processor or a plurality of processors that are operatively connected. The memory 134 can include one or more non-transitory computer-readable storage mediums, such as RAM, ROM, EEPROM, EPROM, flash memory devices, magnetic disks, etc., and combinations thereof. The memory 134 can store data 136 and instructions 138 which are executed by the processor 132 to cause the server computing system 130 to perform operations.

In some implementations, the server computing system 130 includes or is otherwise implemented by one or more server computing devices. In instances in which the server computing system 130 includes plural server computing devices, such server computing devices can operate according to sequential computing architectures, parallel computing architectures, or some combination thereof.

As described above, the server computing system 130 can store or otherwise include one or more machine-learned spiking neural networks 140. For example, the networks 140 can be or can otherwise include various machine-learned models. Example machine-learned models include neural networks or other multi-layer non-linear models. Example neural networks include feed forward neural networks, deep neural networks, recurrent neural networks, and convolutional neural networks. Example networks 140 are discussed with reference to Figures 1 and 2.

The user computing device 102 and/or the server computing system 130 can train the networks 120 and/or 140 via interaction with the training computing system 150 that is communicatively coupled over the network 180. The training computing system 150 can be separate from the server computing system 130 or can be a portion of the server computing system 130.

The training computing system 150 includes one or more processors 152 and a memory 154. The one or more processors 152 can be any suitable processing device (e.g., a processor core, a microprocessor, an ASIC, a FPGA, a controller, a microcontroller, etc.) and can be one processor or a plurality of processors that are operatively connected. The memory 154 can include one or more non-transitory computer-readable storage mediums, such as RAM, ROM, EEPROM, EPROM, flash memory devices, magnetic disks, etc., and combinations thereof. The memory 154 can store data 156 and instructions 158 which are executed by the processor 152 to cause the training computing system 150 to perform operations. In some implementations, the training computing system 150 includes or is otherwise implemented by one or more server computing devices.

The training computing system 150 can include a model trainer 160 that trains the machine-learned networks 120 and/or 140 stored at the user computing device 102 and/or the server computing system 130 using various training or learning techniques, such as, for example, backwards propagation of errors. In some implementations, performing backwards propagation of errors can include performing truncated backpropagation through time. The model trainer 160 can perform a number of generalization techniques (e.g., weight decays, dropouts, etc.) to improve the generalization capability of the models being trained.

In particular, the model trainer 160 can train the spiking neural networks 120 and/or 140 based on a set of training data 162. In some implementations, the model trainer 160 can performed supervised learning techniques to train the networks based on the training data 162. The model trainer 160 can perform any of the techniques or operations described in the Example Training Techniques section above.

In some implementations, if the user has provided consent, the training examples can be provided by the user computing device 102. Thus, in such implementations, the network 120 provided to the user computing device 102 can be trained by the training computing system 150 on user-specific data received from the user computing device 102. In some instances, this process can be referred to as personalizing the model.

The model trainer 160 includes computer logic utilized to provide desired functionality. The model trainer 160 can be implemented in hardware, firmware, and/or software controlling a general purpose processor. For example, in some implementations, the model trainer 160 includes program files stored on a storage device, loaded into a memory and executed by one or more processors. In other implementations, the model trainer 160 includes one or more sets of computer-executable instructions that are stored in a tangible computer-readable storage medium such as RAM hard disk or optical or magnetic media.

The network 180 can be any type of communications network, such as a local area network (e.g., intranet), wide area network (e.g., Internet), or some combination thereof and can include any number of wired or wireless links. In general, communication over the network 180 can be carried via any type of wired and/or wireless connection, using a wide variety of communication protocols (e.g., TCP/IP, HTTP, SMTP, FTP), encodings or formats (e.g., HTML, XML), and/or protection schemes (e.g., VPN, secure HTTP, SSL).

Figure 3A illustrates one example computing system that can be used to implement the present disclosure. Other computing systems can be used as well. For example, in some implementations, the user computing device 102 can include the model trainer 160 and the training dataset 162. In such implementations, the networks 120 can be both trained and used locally at the user computing device 102. In some of such implementations, the user computing device 102 can implement the model trainer 160 to personalize the networks 120 based on user-specific data.

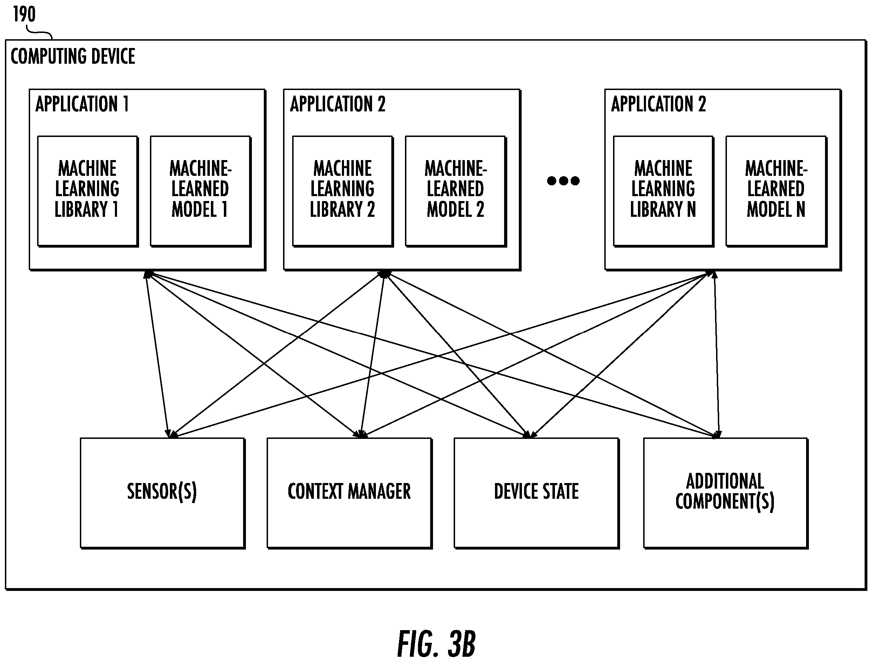

Figure 3B depicts a block diagram of an example computing device 190 according to example embodiments of the present disclosure. The computing device 190 can be a user computing device or a server computing device.

The computing device 190 includes a number of applications (e.g., applications 1 through N). Each application contains its own machine learning library and machine-learned model(s). For example, each application can include a machine-learned model. Example applications include a text messaging application, an email application, a dictation application, a virtual keyboard application, a browser application, etc.

As illustrated in Figure 3B, each application can communicate with a number of other components of the computing device, such as, for example, one or more sensors, a context manager, a device state component, and/or additional components. In some implementations, each application can communicate with each device component using an API (e.g., a public API). In some implementations, the API used by each application is specific to that application.

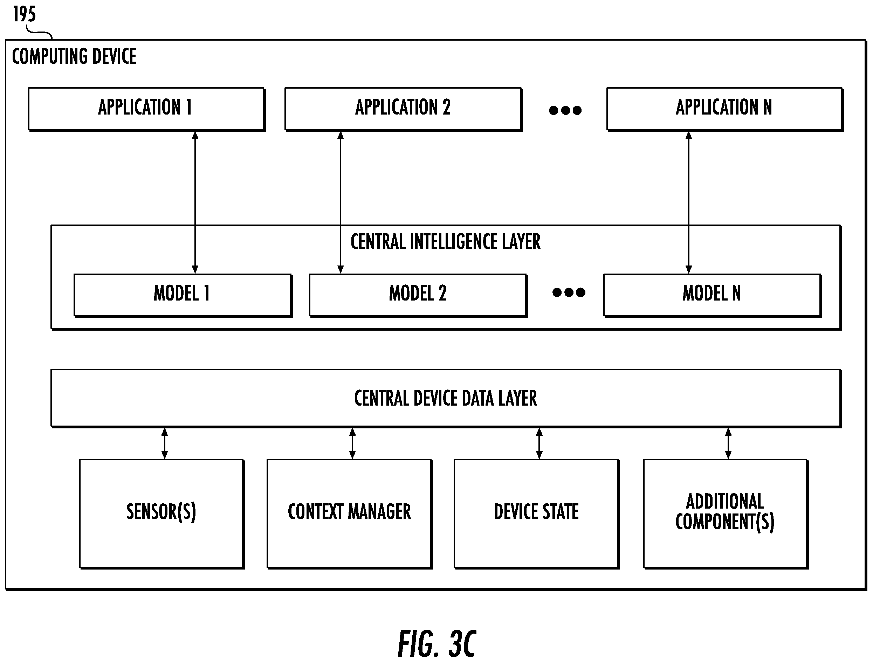

Figure 3C depicts a block diagram of an example computing device 195 according to example embodiments of the present disclosure. The computing device 1can be a user computing device or a server computing device.

The computing device 195 includes a number of applications (e.g., applications 1 through N). Each application is in communication with a central intelligence layer. Example applications include a text messaging application, an email application, a dictation application, a virtual keyboard application, a browser application, etc. In some implementations, each application can communicate with the central intelligence layer (and model(s) stored therein) using an API (e.g., a common API across all applications).

The central intelligence layer includes a number of machine-learned models. For example, as illustrated in Figure 3C, a respective machine-learned model (e.g., a model) can be provided for each application and managed by the central intelligence layer. In other implementations, two or more applications can share a single machine-learned model. For example, in some implementations, the central intelligence layer can provide a single model (e.g., a single model) for all of the applications. In some implementations, the central intelligence layer is included within or otherwise implemented by an operating system of the computing device 195.

The central intelligence layer can communicate with a central device data layer. The central device data layer can be a centralized repository of data for the computing device 195. As illustrated in Figure 3C, the central device data layer can communicate with a number of other components of the computing device, such as, for example, one or more sensors, a context manager, a device state component, and/or additional components. In some implementations, the central device data layer can communicate with each device component using an API (e.g., a private API).

Additional Disclosure

The technology discussed herein makes reference to servers, databases, software applications, and other computer-based systems, as well as actions taken and information sent to and from such systems. The inherent flexibility of computer-based systems allows for a great variety of possible configurations, combinations, and divisions of tasks and functionality between and among components. For instance, processes discussed herein can be implemented using a single device or component or multiple devices or components working in combination. Databases and applications can be implemented on a single system or distributed across multiple systems. Distributed components can operate sequentially or in parallel.

While the present subject matter has been described in detail with respect to various specific example embodiments thereof, each example is provided by way of explanation.

**Claims**

1. A computer system (102, 130) comprising:

   one or more processors (112, 132); and
   one or more non-transitory computer readable media (114, 134) that collectively store:

   a machine-learned spiking neural network (120, 140) that comprises one or more spiking neurons that have an activation layer that uses a double exponential function to model a leaky input that an incoming neuron spike provides to a membrane potential of the spiking neuron; and
   instructions (118, 138) that, when executed by the one or more processors, cause the computer system to perform operations, the operations comprising:

   obtaining a network input;
   implementing the machine-learned spiking neural network (120, 140) to process the network input; and
   receiving a network output generated by the machine-learned spiking neural network (120, 140) as a result of processing the network input;
   wherein the network input comprises audio data and the network output is a speech recognition output; or
   wherein the network input comprises audio or video data and the network output comprises a classification of the network input.

2. The computer system (102, 130) of claim 1, wherein the machine-learned spiking neural network (120, 140) encodes information in respective spike times associated with the one or more spiking neurons, and/or wherein the double exponential function models the leaky input as a double exponential pulse.

3. The computer system (102, 130) of claim 1, or 2, wherein the double exponential function has the form $e^{-t}(t - 1 + c)$, where c is a hyperparameter.

4. The computer system (102, 130) of claim 1, or 2, wherein the double exponential function has the form $te^{-t}$.

5. The computer system (102, 130) of claim 4, wherein the membrane potential of each of the one or more spiking neurons, if it has not spiked, has the form $\Sigma_i w_i(t - t_i)e^{t_i-t}$, where i refers to one or more presynaptic neurons connected to the spiking neuron via one or more artificial synapses with weights $w_i$ and spiking at time points $t_i$.

6. The computer system (102, 130) of claim 5, wherein implementing the machine-learned spiking neural network (120, 140) comprises determining, for each of the one or more spiking neurons, a spike time that corresponds to an earliest time at which the membrane potential of the spiking neuron is equal to a firing threshold, and optionally

wherein determining, for each of the one or more spiking neurons, the spike time comprises applying a Lambert W function to determine the spike time, and optionally
wherein the operations further comprise:
prior to obtaining the network input, training the machine-learned spiking neural network (120, 140) on training data via a gradient descent technique, wherein training the machine-learned spiking neural network (120, 140) via the gradient descent comprises:
determining, for each of the one or more spiking neurons, one or both of:

a derivative of a spike time of such spiking neuron with respect to the time points $t_i$; and
a derivative of the spike time of such spiking neuron with respect to one or more of the weights $w_i$, wherein the spike time corresponds to an earliest time at which the membrane potential of such spiking neuron is equal to a firing threshold; and

modifying, for each of the one or more spiking neurons, at least one of the weights $w_i$ based at least in part on one or both of the derivative of the spike time of such spiking neuron with respect to the time points $t_i$ and the derivative of the spike time of such spiking neuron with respect to one or more of the weights $w_i$.

7. The computer system (102, 130) of any preceding claim, wherein the machine-learned spiking neural network (120, 140) comprises a plurality of layers, at least two of the plurality of layers comprising at least one of the one or more spiking neurons, and wherein the machine-learned spiking neural network (120, 140) has been trained on training data using a backpropagation technique, and optionally wherein the operations further comprise:
training the machine-learned spiking neural network (120, 140) on training data via a gradient descent technique to simultaneously learn both parameters of the machine-learned spiking neural network (120, 140) and a topology of the machine-learned spiking neural network (120, 140).

8. A computer-implemented method to train a spiking neural network that encodes information in respective spike times associated with a plurality of spiking neurons included in the spiking neural network (120, 140), the method comprising:

obtaining, by one or more computing devices, data descriptive of the spiking neural network (120, 140) that comprises the plurality of spiking neurons, wherein each of the plurality of spiking neurons is respectively connected to one or more pre-synaptic neurons via one or more artificial synapses that have one or more weights associated therewith, wherein each of the plurality of spiking neurons has an activation layer that controls a respective spike time of such spiking neuron based on a membrane potential of such spiking neuron, and wherein the activation layer for each of the plurality of spiking neurons comprises a double exponential function that models incoming spikes received from the one or more pre-synaptic neurons as leaky inputs to the membrane potential; and
training, by the one or more computing devices, the spiking neural network (120, 140) based on a set of training data, wherein training, by the one or more computing devices, the spiking neural network (120, 140) comprises:

determining, by the one or more computing devices, a gradient of a loss function that evaluates a performance of the spiking neural network (120, 140) on the set of training data; and
modifying, by the one or more computing devices for at least one of the plurality of spiking neurons, at least one of the one or more weights based at least in part on the gradient of the loss function; and wherein

the spiking neural network is trained to generate a speech recognition output from input audio data; or
the spiking neural network is trained to generate a classification output from input audio or video data.

9. The computer-implemented method of claim 8, wherein:

each of the plurality of spiking neurons receives the incoming spikes from the one or more presynaptic neurons at respective inbound spike times; and
determining, by the one or more computing devices, the gradient of the loss function comprises determining, by the one or more computing devices, for at least one of the plurality of spiking neurons, a derivative of the spike time of such spiking neuron with respect to the inbound spike times.

10. The computer-implemented method of claim 8 or 9, wherein determining, by the one or more computing devices, the gradient of the loss function comprises determining, by the one or more computing devices, for at least one of the plurality of spiking neurons, a derivative of the spike time of such spiking neuron with respect to one or more of the weights associated with such spiking neuron.

11. The computer-implemented method of claim 8, 9, or 10 wherein training, by the one or more computing devices, the spiking neural network further comprises modifying, by the one or more computing devices for at least one of the plurality of spiking neurons, at least one synaptic delay parameter based at least in part on the gradient of the loss function.

12. The computer-implemented method of any of claims 8-11, wherein:

the plurality of spiking neurons are arranged in a plurality of layers; and
training, by the one or more computing devices, the spiking neural network (120, 140) comprises backpropagating, by the one or more computing devices, the loss function through the plurality of layers.

13. The computer-implemented method of any of claims 8-12, wherein, for each of the plurality of spiking neurons, the membrane potential, if such spiking neuron has not yet spiked, has the form $\sum_i w_i(t - t_i)e^{t_i - t}$, where i refers to the one or more presynaptic neurons connected to such spiking neuron via one or more artificial synapses, $w_i$ refers to the one or more weights associated with the one or more artificial synapses, and $t_i$ refers to respective inbound spike times at which such spiking neuron receives the incoming spikes from the one or more presynaptic neurons.

14. A computer program comprising machine-readable instructions which, when the program is executed by a computing apparatus, cause the computing apparatus to perform the method of any of claims 8 to 13.

**Patentansprüche**

1. Rechensystem (102, 130), umfassend:

einen oder mehrere Prozessoren (112, 132); und
ein oder mehrere nichttransitorische computerlesbare Medien (114, 134), die gemeinsam Folgendes speichern:

ein maschinenlernendes neuronales Spiking-Netz (120, 140), das ein oder mehrere Spiking-Neuronen umfasst, die eine Aktivierungsschicht aufweisen, die eine doppelte exponentielle Funktion verwendet, um eine undichte Eingabe zu modellieren, die ein eingehender Neuronen-Spike einem Membranpotenzial des Spiking-Neurons bereitstellt; und
Anweisungen (118, 138), die, wenn sie durch den einen oder die mehreren Prozessoren ausgeführt werden, das Rechensystem veranlassen, Vorgänge durchzuführen, wobei die Vorgänge Folgendes umfassen:

Erlangen einer Netzeingabe;
Implementieren des maschinenlernenden neuronalen Spiking-Netzes (120, 140) zum Verarbeiten der Netzeingabe; und
Empfangen einer Netzausgabe, die durch das maschinenlernende neuronale Spiking-Netz (120, 140) als ein Ergebnis des Verarbeitens der Netzeingabe erzeugt wird;
wobei die Netzeingabe Audiodaten umfasst und die Netzausgabe eine Spracherkennungsausgabe ist; oder
wobei die Netzeingabe Audio- oder Videodaten umfasst und die Netzausgabe eine Klassifizierung der Netzeingabe umfasst.

2. Rechensystem (102, 130) nach Anspruch 1, wobei das maschinenlernende neuronale Spiking-Netz (120, 140) Informationen in jeweiligen Spike-Zeiten codiert, die das eine oder den mehreren Spiking-Neuronen zugeordnet sind, und/oder wobei die doppelte exponentielle Funktion die undichte Eingabe als einen doppelten exponentiellen Impuls modelliert.

3. Rechensystem (102, 130) von Anspruch 1 oder 2, wobei die doppelte exponentielle Funktion die Form $e^{-t}(t - 1 + c)$ aufweist, wo c ein Hyperparameter ist.

4. Rechensystem (102, 130) von Anspruch 1 oder 2, wobei die doppelte exponentielle Funktion die Form $te^{-t}$ aufweist.

**5.** Rechensystem (102, 130) nach Anspruch 4, wobei das Membranpotential jedes der einen oder der mehreren Spiking-Neuronen, wenn es nicht gepsiked hat, die Form $\Sigma_i\, w_i\, (t - t_i)e^{t_i-t}$ aufweist, wobei sich *i* auf ein oder mehrere präsynaptische Neuronen bezieht, die über eine oder mehrere künstliche Synapsen mit Gewichten $w_i$ mit dem Spiking-Neuron verbunden sind und zu Zeitpunkten $t_i$ spiken.

**6.** Rechensystem (102, 130) nach Anspruch 5, wobei das Implementieren des maschinenlernenden neuronalen Spiking-Netzes (120, 140) das Bestimmen einer Spike-Zeit für jedes der einen oder der mehreren Spiking-Neuronen umfasst, die einem frühesten Zeitpunkt entspricht, zu dem das Membranpotenzial des Spiking-Neurons gleich einer Zündschwelle ist, und optional

wobei das Bestimmen der Spike-Zeit für jedes der einen oder der mehreren Spiking-Neuronen Anwenden einer Lambert-W-Funktion zum Bestimmen der Spike-Zeit umfasst, und optional
wobei die Vorgänge ferner Folgendes umfassen:
vor dem Erlangen der Netzeingabe, Trainieren des maschinenlernenden neuronalen Spiking-Netzes (120, 140) auf Trainingsdaten über eine Gradientenabstiegstechnik, wobei das Trainieren des maschinenlernenden neuronalen Spiking-Netzes (120, 140) über den Gradientenabstieg Folgendes umfasst:
Bestimmen für jedes der einen oder der mehreren Spiking-Neuronen eines oder beides von:

eine Ableitung einer Spike-Zeit eines derartigen Spiking-Neurons in Bezug auf die Zeitpunkte $t_i$; und
eine Ableitung der Spike-Zeit eines derartigen Spiking-Neurons in Bezug auf eines oder mehrere der Gewichte $w_i$, wobei die Spike-Zeit einer frühesten Zeit entspricht, zu der das Membranpotential eines derartigen Spiking-Neurons gleich einer Zündschwelle ist; und
Modifizieren mindestens eines der Gewichte $w_i$ für jedes der einen oder der mehreren Spiking-Neuronen basierend zumindest teilweise auf einer oder beiden Ableitungen der Spike-Zeit eines solchen Spiking-Neurons in Bezug auf die Zeitpunkte $t_i$ und der Ableitung der Spike-Zeit eines solchen Spiking-Neurons in Bezug auf eines oder mehrere der Gewichte $w_i$.

**7.** Rechensystem (102, 130) nach einem der vorhergehenden Ansprüche, wobei das maschinenlernende neuronale Spiking-Netz (120, 140) eine Vielzahl von Schichten umfasst, wobei mindestens zwei der Vielzahl von Schichten mindestens eines der einen oder der mehreren Spiking-Neuronen umfassen, und wobei das maschinenlernende neuronale Spiking-Netz (120, 140) unter Verwendung einer Backpropagation-Technik auf Trainingsdaten trainiert wurde und optional wobei die Vorgänge ferner Folgendes umfassen:
Trainieren des maschinenlernenden neuronalen Spiking-Netzes (120, 140) auf Trainingsdaten über eine Gradientenabstiegstechnik, um gleichzeitig sowohl die Parameter des maschinenlernenden neuronalen Spiking-Netzes (120, 140) als auch eine Topologie des maschinenlernenden neuronalen Spiking-Netzes (120, 140) zu erlernen.

**8.** Computerimplementiertes Verfahren zum Trainieren eines neuronalen Spiking-Netzes, das Informationen in jeweiligen Spike-Zeiten codiert, die einer Vielzahl von Spiking-Neuronen zugeordnet sind, die in dem neuronalen Spiking-Netz (120, 140) enthalten ist, wobei das Verfahren Folgendes umfasst:

Erlangen von Daten, die das neuronale Spiking-Netz (120, 140) beschreiben, das die Vielzahl von Spiking-Neuronen umfasst, durch ein oder mehrere Rechenvorrichtungen, wobei jedes der Vielzahl von Spiking-Neuronen jeweils mit einem oder mehreren präsynaptischen Neuronen über eine oder mehrere künstliche Synapsen, die ein oder mehrere Gewichte damit zugeordnet haben, verbunden ist, wobei jedes der Vielzahl von Spiking-Neuronen eine Aktivierungsschicht aufweist, die eine jeweilige Spike-Zeit solcher Spiking-Neuronen basierend auf einem Membranpotenzial solcher Spiking-Neuronen steuert, und wobei die Aktivierungsschicht für jedes der Vielzahl von Spiking-Neuronen eine doppelte exponentielle Funktion umfasst, die eingehende Spikes, die von dem einen oder den mehreren präsynaptischen Neuronen empfangen werden, als undichte Eingaben in das Membranpotenzial modelliert; und
Trainieren des neuronalen Spiking-Netzes (120, 140) basierend auf einem Satz von Trainingsdaten durch die eine oder die mehreren Rechenvorrichtungen, wobei das Trainieren des neuronalen Spiking-Netzes (120, 140) durch die eine oder die mehreren Rechenvorrichtungen Folgendes umfasst:

Bestimmen eines Gradienten einer Verlustfunktion, die eine Leistung des neuronalen Spiking-Netzes (120, 140) auf dem Satz von Trainingsdaten auswertet, durch die eine oder die mehreren Rechenvorrichtungen; und
Modifizieren mindestens eines der ein oder mehreren Gewichte basierend zumindest teilweise auf dem Gradienten der Verlustfunktion durch die eine oder die mehreren Rechenvorrichtungen für mindestens eines der Vielzahl von Spiking-Neuronen; und wobei

das neuronale Spiking-Netz trainiert wird, um aus eingegebenen Audiodaten eine Spracherkennungsausgabe zu erzeugen; oder

das neuronale Spiking-Netz trainiert wird, um eine Klassifizierungsausgabe aus eingegebenen Audio- oder Videodaten zu erzeugen.

**9.** Computerimplementiertes Verfahren nach Anspruch 8, wobei:

jedes der Vielzahl von Spiking-Neuronen die eingehenden Spikes von dem einen oder den mehreren präsynaptischen Neuronen zu den jeweiligen Inbound-Spike-Zeiten empfängt; und

das Bestimmen des Gradienten der Verlustfunktion das Bestimmen einer Ableitung der Spike-Zeit eines solchen Spike-Neurons in Bezug auf die Inbound-Spike-Zeiten umfasst, durch die eine oder die mehreren Rechenvorrichtungen für mindestens eines der Vielzahl von Spike-Neuronen.

**10.** Computerimplementiertes Verfahren nach Anspruch 8 oder 9, wobei das Bestimmen des Gradienten der Verlustfunktion das Bestimmen einer Ableitung der Spike-Zeit eines solchen Spike-Neurons in Bezug auf eines oder mehrere der Gewichte, die solchen Spiking-Neuronen zugeordnet sind, umfasst, durch die eine oder die mehreren Rechenvorrichtungen für mindestens eines der Vielzahl von Spike-Neuronen.

**11.** Computerimplementiertes Verfahren nach Anspruch 8, 9 oder 10, wobei das Trainieren des neuronalen Spiking-Netzes ferner das Modifizieren mindestens eines synaptischen Verzögerungsparameters basierend zumindest teilweise auf dem Gradienten der Verlustfunktion umfasst, durch die eine oder die mehreren Rechenvorrichtungen für mindestens eines der Vielzahl von Spiking-Neuronen.

**12.** Computerimplementiertes Verfahren nach einem der Ansprüche 8-11, wobei:

die Vielzahl von Spiking-Neuronen in einer Vielzahl von Schichten angeordnet ist; und

das Trainieren des neuronalen Spiking-Netzes (120, 140) durch die eine oder die mehreren Rechenvorrichtungen Rückpropagieren der Verlustfunktion durch die Vielzahl von Schichten durch die eine oder die mehreren Rechenvorrichtungen umfasst.

**13.** Computerimplementiertes Verfahren nach einem der Ansprüche 8-12, wobei das Membranpotential, wenn ein solches Spiking-Neuron noch nicht gepsiked hat, für jedes der Vielzahl von Spiking-Neuronen die Form $\Sigma_i\, w_i\, (t - t_i)e^{t_i - t}$ aufweist, wo sich $i$ auf das eine oder die mehreren präsynaptischen Neuronen bezieht, die über eine oder mehrere künstliche Synapsen mit einem solchen Spiking-Neuron verbunden sind, sich $w_i$ auf das eine oder die mehreren Gewichte bezieht, die dem einen oder den mehreren künstlichen Synapsen zugeordnet sind, und sich $t_i$ auf die jeweiligen Zeiten des Empfangs von Spikes, zu denen ein derartiges Spiking-Neuron die eingehenden Spikes von dem einen oder den mehreren präsynaptischen Neuronen empfängt.

**14.** Computerprogramm, umfassend maschinenlesbare Anweisungen, die, wenn das Programm durch ein Rechengerät ausgeführt werden, das Rechengerät veranlassen, das Verfahren nach einem der Ansprüche 8 bis 13 durchzuführen.

**Revendications**

**1.** Système informatique (102, 130) comprenant :

un ou plusieurs processeurs (112, 132) ; et
un ou plusieurs supports non transitoires lisibles par ordinateur (114, 134) qui stockent collectivement :

un réseau de neurones impulsionnels appris par machine (120, 140) qui comprend un ou plusieurs neurones impulsionnels qui ont une couche d'activation qui utilise une fonction exponentielle double pour modéliser une entrée de fuite qu'une impulsion de neurone entrante fournit à un potentiel de membrane du neurone impulsionnel ; et

des instructions (118, 138) qui, lorsqu'elles sont exécutées par les un ou plusieurs processeurs, amènent le système informatique à exécuter des opérations, les opérations comprenant :

l'obtention d'une entrée de réseau ;

la mise en œuvre du réseau de neurones impulsionnels appris par machine (120, 140) pour traiter l'entrée de réseau ; et

la réception d'une sortie de réseau générée par le réseau de neurones impulsionnels appris par machine (120, 140) à la suite du traitement de l'entrée de réseau ;

dans lequel l'entrée de réseau comprend des données audio et la sortie de réseau est une sortie de reconnaissance vocale ; ou

dans lequel l'entrée de réseau comprend des données audio ou vidéo et la sortie de réseau comprend une classification de l'entrée de réseau.

2.  Système informatique (102, 130) selon la revendication 1, dans lequel le réseau de neurones impulsionnels appris par machine (120, 140) code des informations dans des temps d'impulsions respectifs associés aux un ou plusieurs neurones impulsionnels, et/ou dans lequel la fonction exponentielle double modélise l'entrée de fuite en tant qu'impulsion exponentielle double.

3.  Système informatique (102, 130) selon la revendication 1 ou 2, dans lequel la fonction exponentielle double a la forme $e^{-t}(t - 1 + c)$, où $c$ est un hyperparamètre.

4.  Système informatique (102, 130) selon la revendication 1 ou 2, dans lequel la fonction exponentielle double a la forme $te^{-t}$.

5.  Système informatique (102, 130) selon la revendication 4, dans lequel le potentiel de membrane de chacun des un ou plusieurs neurones impulsionnels, s'il n'a pas été pulsé, a la forme $\Sigma_i\, w_i(t - t_i)e^{t_i - t}$, où $i$ fait référence à un ou plusieurs neurones présynaptiques connectés au neurone impulsionnel via une ou plusieurs synapses artificielles avec des poids $w_i$ et des impulsions à des moments $t_i$.

6.  Système informatique (102, 130) selon la revendication 5, dans lequel la mise en œuvre du réseau de neurones impulsionnels appris par machine (120, 140) comprend la détermination, pour chacun des un ou plusieurs neurones impulsionnels, d'un temps d'impulsion qui correspond à un temps le plus précoce auquel le potentiel de membrane du neurone impulsionnel est égal à un seuil de déclenchement, et éventuellement

    dans lequel la détermination, pour chacun des un ou plusieurs neurones impulsionnels, du temps d'impulsion comprend l'application d'une fonction Lambert W pour déterminer le temps d'impulsion, et éventuellement

    dans lequel les opérations comprennent également :

    avant l'obtention de l'entrée de réseau, l'entraînement du réseau de neurones impulsionnels appris par machine (120, 140) sur des données d'entraînement via une technique de descente de gradient, dans lequel l'entraînement du réseau de neurones impulsionnels appris par machine (120, 140) via la descente de gradient comprend :

    la détermination, pour chacun des un ou plusieurs neurones impulsionnels, d'un ou des deux éléments suivants :

      une dérivée d'un temps d'impulsion d'un tel neurone impulsionnel par rapport aux points temporels $t_i$ ; et

      une dérivée du temps d'impulsion d'un tel neurone impulsionnel par rapport à un ou plusieurs des poids $w_i$, dans lequel le temps d'impulsion correspond à un temps le plus précoce auquel le potentiel de membrane d'un tel neurone impulsionnel est égal à un seuil de déclenchement ; et

      la modification, pour chacun des un ou plusieurs neurones impulsionnels, d'au moins un des poids $w_i$ sur la base au moins en partie de l'une ou des deux de la dérivée du temps d'impulsion d'un tel neurone impulsionnel par rapport aux points temporels $t_i$ et de la dérivée du temps d'impulsion d'un tel neurone impulsionnel par rapport à un ou plusieurs des poids $w_i$.

7.  Système informatique (102, 130) selon une quelconque revendication précédente, dans lequel le réseau de neurones impulsionnels appris par machine (120, 140) comprend une pluralité de couches, au moins deux de la pluralité de couches comprenant au moins un des un ou plusieurs neurones impulsionnels, et dans lequel le réseau de neurones impulsionnels appris par machine (120, 140) a été entraîné sur des données d'entraînement à l'aide d'une technique de rétropropagation, et éventuellement dans lequel les opérations comprennent également : l'entraînement du réseau de neurones impulsionnels appris par machine (120, 140) sur des données d'entraînement via une technique de descente de gradient pour apprendre simultanément à la fois des paramètres du réseau de neurones impulsionnels appris par machine (120, 140) et une topologie du réseau de neurones impulsionnels appris par machine (120, 140).

**8.** Procédé mis en œuvre par ordinateur pour entraîner un réseau de neurones impulsionnels qui code des informations dans des temps d'impulsions respectifs associés à une pluralité de neurones impulsionnels inclus dans le réseau de neurones impulsionnels (120, 140), le procédé comprenant :

l'obtention, par un ou plusieurs dispositifs informatiques, de données descriptives du réseau de neurones impulsionnels (120, 140) qui comprend la pluralité de neurones impulsionnels, dans lequel chacun de la pluralité de neurones impulsionnels est respectivement connecté à un ou plusieurs neurones présynaptiques via une ou plusieurs synapses artificielles qui ont un ou plusieurs poids associés à celles-ci, dans lequel chacun de la pluralité de neurones impulsionnels a une couche d'activation qui commande un temps d'impulsion respectif d'un tel neurone impulsionnel sur la base d'un potentiel de membrane d'un tel neurone impulsionnel, et dans lequel la couche d'activation pour chacun de la pluralité de neurones impulsionnels comprend une fonction exponentielle double qui modélise des impulsions entrantes reçues d'un ou de plusieurs neurones présynaptiques en tant qu'entrées de fuite au potentiel de membrane ; et

l'entraînement, par les un ou plusieurs dispositifs informatiques, du réseau de neurones impulsionnels (120, 140) sur la base d'un ensemble de données d'entraînement, dans lequel l'entraînement, par les un ou plusieurs dispositifs informatiques, du réseau de neurones impulsionnels (120, 140) comprend :

la détermination, par les un ou plusieurs dispositifs informatiques, d'un gradient d'une fonction de perte qui évalue une performance du réseau de neurones impulsionnels (120, 140) sur l'ensemble de données d'entraînement ; et

la modification, par les un ou plusieurs dispositifs informatiques pour au moins un de la pluralité de neurones impulsionnels, d'au moins un des un ou plusieurs poids sur la base au moins en partie du gradient de la fonction de perte ; et dans lequel

le réseau de neurones impulsionnels est entraîné pour générer une sortie de reconnaissance vocale à partir de données audio d'entrée ; ou

le réseau de neurones impulsionnels est entraîné pour générer une sortie de classification à partir de données audio ou vidéo d'entrée.

**9.** Procédé mis en œuvre par ordinateur selon la revendication 8, dans lequel :

chacun de la pluralité de neurones impulsionnels reçoit les impulsions entrantes à partir des un ou plusieurs neurones présynaptiques à des temps d'impulsions entrantes respectifs ; et

la détermination, par les un ou plusieurs dispositifs informatiques, du gradient de la fonction de perte comprend la détermination, par les un ou plusieurs dispositifs informatiques, pour au moins un de la pluralité de neurones impulsionnels, d'une dérivée du temps d'impulsion d'un tel neurone impulsionnel par rapport aux temps d'impulsions entrantes.

**10.** Procédé mis en œuvre par ordinateur selon la revendication 8 ou 9, dans lequel la détermination, par les un ou plusieurs dispositifs informatiques, du gradient de la fonction de perte comprend la détermination, par les un ou plusieurs dispositifs informatiques, pour au moins un de la pluralité de neurones impulsionnels, d'une dérivée du temps d'impulsion d'un tel neurone impulsionnel par rapport à un ou plusieurs des poids associés à un tel neurone impulsionnel.

**11.** Procédé mis en œuvre par ordinateur selon la revendication 8, 9 ou 10, dans lequel l'entraînement, par les un ou plusieurs dispositifs informatiques, du réseau de neurones impulsionnels comprend également la modification, par les un ou plusieurs dispositifs informatiques pour au moins un de la pluralité de neurones impulsionnels, d'au moins un paramètre de retard synaptique sur la base au moins en partie du gradient de la fonction de perte.

**12.** Procédé mis en œuvre par ordinateur selon l'une quelconque des revendications 8 à 11, dans lequel :

la pluralité de neurones impulsionnels sont agencés en une pluralité de couches ; et

l'entraînement, par les un ou plusieurs dispositifs informatiques, du réseau de neurones impulsionnels (120, 140) comprend la rétropropagation, par les un ou plusieurs dispositifs informatiques, de la fonction de perte à travers la pluralité de couches.

**13.** Procédé mis en œuvre par ordinateur selon l'une quelconque des revendications 8 à 12, dans lequel, pour chacun de la pluralité de neurones impulsionnels, le potentiel de membrane, si un tel neurone impulsionnel n'a pas encore été pulsé, a la forme $\sum_i w_i(t - t_i)e^{t_i - t}$, où $i$ fait référence aux un ou plusieurs neurones présynaptiques connectés à un tel neurone impulsionnel via une ou plusieurs synapses artificielles, $w_i$ fait référence aux un ou plusieurs poids associés aux une ou plusieurs synapses artificielles, et $t_i$ fait référence aux temps d'impulsions entrantes respectifs auxquels un tel neurone impulsionnel reçoit les impulsions entrantes à partir des un ou plusieurs neurones présynaptiques.

14. Programme informatique comprenant des instructions lisibles par machine qui, lorsque le programme est exécuté par un appareil informatique, amènent l'appareil informatique à exécuter le procédé selon l'une quelconque des revendications 8 à 13.

FIG. 1

EP 3 815 000 B1

LEAKY INPUT: $te^{-t}$

FIG. 2A

FIG. 2B

*FIG. 2C*

EP 3 815 000 B1

**FIG. 3A**

FIG. 3B

*FIG. 3C*

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 62744150

**Non-patent literature cited in the description**

- Supervised Learning Based on Temporal Coding in Spiking Neural Network. **MOSTAFA HESHAM**. IEEE Transactions on Neural Networks and Learning Systems. IEEE, 01 July 2018, vol. 29, 3227-3235

- **ALLAN D. COOP et al.** The Composite Neuron: A Realistic One-Compartment Purkinje Cell Model Suitable for Large-Scale Neuronal Network Simulations. *Journal of Computational Neuroscience*, 01 March 2001, 173-186